# FASCICULE DE BREVET EUROPEEN

(11) **EP 0 475 855 B1**
(45) Date de publication et mention de la délivrance du brevet: **04.05.1994**
(21) Numéro de dépôt: 91420286.6
(22) Date de dépôt: 01.08.1991
(51) Int. Cl.: A22C 17/00

(54) **Dispositif de coupe de tranches de viandes et/ou de légumes, pour la réalisation de brochettes**
Scheibenschneider für Fleisch und/oder Gemüse zur Herstellung von Spiessen
Device for cutting slices of meat and/or vegetables for the preparation of skewered products

(30) Priorité: 03.08.1990 FR 9010227
(43) Date de publication de la demande: 18.03.1992
(73) Titulaire: EMSENS ANTOINE SARL, 42490 Fraisses (FR)
(72) Inventeur: Emsens, Michel, F-42490 Fraisses (FR)
(74) Mandataire: Dupuis, François

(56) Documents cités:
- EP-A- 0 078 232
- FR-A- 2 494 092
- FR-A- 2 535 169
- FR-A- 2 572 894

## Description

Il est connu d'employer, pour la fabrication de brochettes de viande et/ou de légumes ou autres produits, alimentaires, des bacs destinés à être garnis des différentes couches du ou des produits concernés. Le bac est susceptible de coopérer avec tout système conformé pour assurer l'embrochage de broches ou pics en bois, au travers des différentes couches disposées à l'intérieur.

En outre, d'une manière connue, chacune des faces du bac, présente une pluralité de fentes verticales permettant le passage d'un moyen de coupe pour la réalisation des brochettes en tant que telles. Cette coupe peut être effectuée soit manuellement, soit automatiquement.

Dans le cas d'une coupe manuelle, on introduit à la partie supérieure du bac, une lame de couteau successivement dans chacune des fentes, et on exerce sur le couteau un effort d'appui combiné avec un mouvement de va et vient. Cette façon de procéder s'effectue sur deux faces perpendiculaires du bac. On conçoit que ce mode de tranchage est pénible et n'est pas adapté dans le cas d'une fabrication industrielle de brochettes.

Pour tenter de remédier à ces inconvénients, on a proposé des appareils ou dispositifs permettant d'effectuer une coupe d'une manière automatique. Quelle que soit leur forme de réalisation, ces appareils comprennent pour l'essentiel une pluralité de lames disposées en correspondance et en alignement avec les fentes du bac. Cet état de la technique peut être illustré, par exemple, par l'enseignement des brevets FR-A-2494092 et FR-A-2537401 qui proposent deux solutions différentes avec chacune, des avantages et des inconvénients notamment au niveau de la qualité de la coupe et de la rapidité. De tels inconvénients résultent essentiellement des moyens de mise en oeuvre et du mouvement appliqué à chacune des lames.

L'invention s'est fixée pour but de remédier à ces inconvénients d'une manière simple, efficace et rationnelle.

Le problème que se propose de résoudre l'invention est d'assurer une qualité de coupe parfaite sans pour autant diminuer la cadence de production, c'est-à-dire pouvoir effectuer le tranchage de la totalité des couches de viandes et/ou de légumes du bac, dans un laps de temps très réduit.

Un tel problème est résolu en ce que l'ensemble recevant les lames est assujetti à des moyens de commande aptes à soumettre successivement les lames à un mouvement de pénétration à l'intérieur du bac, à un mouvement de pivotement angulaire selon un arc de cercle limité pour correspondre à la totalité de la hauteur du bac , et à un mouvement de retrait, pour assurer, par la combinaison de ces mouvements, le tranchage de la totalité des différentes couches de viandes et/ou de légumes.

Pour résoudre le problème posé de faciliter la coupe au moment de la pénétration des lames dans le bac, les lames occupent une position angulaire délimitant par rapport au plan horizontal, un angle aigu situé du côté du tranchant desdites lames.

Un autre problème que se propose de résoudre l'invention est de diminuer les forces exercées sur le bac, tout en facilitant la coupe, compte-tenu du mouvement décrit par les lames. Un tel problème est résolu en ce que l'ensemble est équipé d'organes aptes à soumettre alternativement chacune des lames à un mouvement de vibration horizontal correspondant à une force de poussée et de traction pour équilibrer les efforts exercés sur le bac au moment de la coupe.

Avantageusement, eu égard au problème posé d'assujettir les lames à un mouvement spécial combinant plusieurs déplacements dans l'espace, pour assurer le tranchage, l'ensemble comprend un bloc monté à libre articulation sur une embase assujetti à des moyens de commande pour être déplacée en translation en direction du bac, ledit bloc auquel sont accouplées les lames, étant assujetti à des moyens pour être pivoté angulairement selon l'arc de cercle.

Le problème posé de soumettre alternativement chacune des lames respectivement à un mouvement de poussée et à un mouvement de traction est résolu en ce que le bloc reçoit les organes d'accouplement des lames sous forme de deux modules indépendants montés avec capacité de déplacement linéaire en translation limité à l'intérieur dudit bloc, chacun desdits modules étant accouplé à un moyen de commande pour être déplacé linéairement et alternativement selon deux sens opposés, chaque module reçevant une série de lames.

Les modules sont disposés en superposition, les parties d'extrémité d'accouplement des lames étant conformées, pour qu'après fixation dans les modules correspondants, lesdites lames soient disposées dans un même plan horizontal.

Le problème posé d'avoir la totalité des lames dans un même plan horizontal, est résolu en ce que les extrémités d'accouplement des lames présentent un talon coopérant dans des rainures correspondantes des modules.

Avantageusement, eu égard à la position inclinée des lames au moment de leur pénétration dans le bac, l'articulation du bloc recevant les lames est disposée très sensiblement à une égale distance des parties haute et basse du bac.

Compte-tenu du problème posé et des mouvements spécifiques combinés des lames pour effectuer le tranchage, le dispositif selon l'invention est asservi par des moyens de commande aptes à assurer le cycle de fonctionnement suivant, en combinaison avec des détecteurs de position :
- déplacement en translation de l'ensemble en direction du bac, les lames étant inclinées ;
- pénétration des lames, en position inclinée, dans les différentes couches de viandes et/ou de légumes, au niveau de la partie haute ou basse du bac ;
- lorsque l'extrémité libre au moins des lames à pénétrée dans la totalité de la largeur du bac, pivotement angulaire de l'ensemble selon un arc de cercle décrivant la totalité de la hauteur du bac ;
- déplacement en translation de l'ensemble en sens inverse, pour le retrait des lames.

Le dispositif trouve une application particulièrement avantageuse à une machine pour la fabrication automatique de brochettes de viandes et/ou de légumes.

Le dispositif de coupe peut être utilisé soit séparemment directement en liaison avec un bac garni de différentes couches de viandes et/ou de légumes préalablement embrochées, soit en combinaison avec un embrochage automatique tel que celui décrit dans les brevets FR-A-2537401 et FR-A-2590469.

L'invention est exposée ci-après plus en détail à l'aide des dessins annexés, dans lesquels :

Les figures 1, 2, 3 et 4 sont des vues à caractère schématique montrant le principe de fonctionnement du dispositif de coupe selon l'invention.

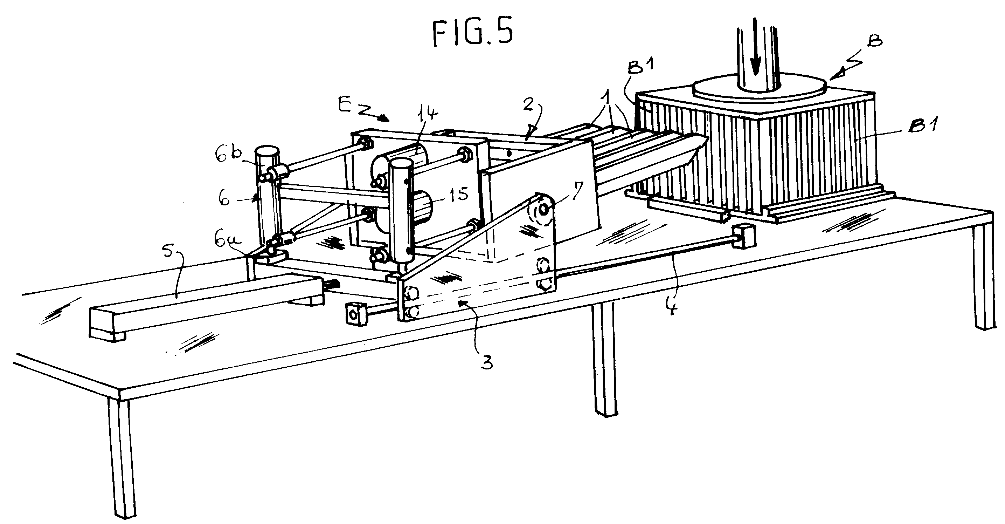

La figure 5 est une vue en perspective du dispositif de coupe selon l'invention.

La figure 6 est à une échelle plus importante, une vue en coupe longitudinale montrant un exemple d'accouplement des lames de couteaux dans le bloc support.

La figure 7 est une vue en coupe transversale considérée selon la ligne 7-7 de la figure 6.

La figure 8 est une vue en plan et en coupe à caractère schématique du dispositif.

La figure 9 est une vue partielle en perspective montrant l'accouplement des lames de couteaux.

Le dispositif de coupe selon l'inveniton, comprend un ensemble (E) équipé de plusieurs lames (1) disposées en correspondance et en alignement avec des fentes (B1) que présente un bac (B). De manière parfaitement connue, ce bac (B) reçoit différentes couches de viandes et/ou de légumes. De même, toujours de manière connue, l'ensemble (E) est monté avec capacité de déplacement en translation en direction du bac (B).

Selon une caractéristique à la base de l'invention, l'ensemble (E) est assujetti à des moyens aptes à soumettre les lames (1) à plusieurs mouvements successifs, à savoir :
- un mouvement de pénétration à l'intérieur du bac
- un mouvement de pivotement angulaire selon un arc de cercle limité et déterminé pour correspondre à la totalité de la hauteur du bac
- un mouvement de retrait.

La combinaison de ces mouvements assure le tranchage de la totalité des différentes couches de viandes et/ou de légumes contenues à l'intérieur du bac.

Avantageusement, au moment de la pénétration dans le bac, les lames (1) occupent une position angulaire (α) qui délimite, par rapport au plan horizontal, un angle aigu situé du côté du tranchant (1a) desdites lames.

Pour l'essentiel, l'ensemble (E) comprend un bloc (2) monté à libre articulation sur une embase coulissante (3). L'embase est montée à libre coulissement sur des tiges de guidage (4) et est accouplée à un organe de commande (5) du type vérin pour être déplacée linéairement en translation en direction du bac (B).

Le bloc (2) est agencé pour recevoir les différentes lames (1). En outre, le bloc (2) est assujetti à des moyens de commande (6) pour être pivoté angulairement par rapport à son axe d'articulation (7) pour faire varier de manière concomitante, la position angulaire des lames selon le mouvement en arc de cercle. Par exemple, les moyens de commande (6) sont constitués par deux vérins verticaux dont la tige (6a) est accouplée à une partie de l'embase, tandis que le fût (6b) est accouplé, d'une manière articulée, à une partie du bloc (2).

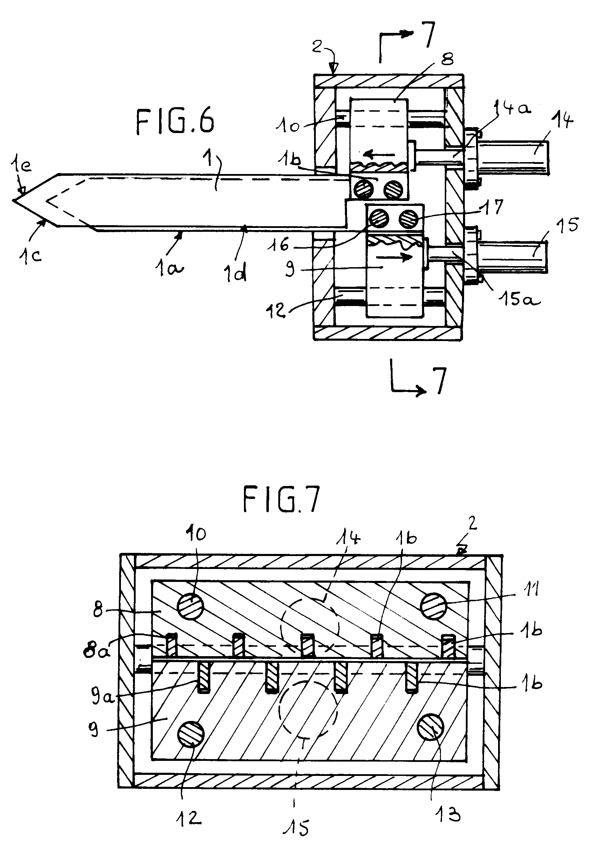

Suivant une autre caractéristique, les lames (1) sont accouplées au bloc (2) en combinaison avec des organes (8) et (9) aptes à soumettre alternativement chacune des lames à un mouvement de vibration horizontale, respectivement selon un sens de poussée (P) et de traction (T). Comme le montre notamment la figure 6, les organes (8) et (9) sont constitués par deux modules indépendants montés avec capacité de déplacement linéaire en translation à l'intérieur du bloc (2).

Par exemple, chaque module est monté à libre coulissement sur deux tiges parallèles de guidage (10-11) et (12-13). Chacun des modules (8) et (9) est accouplé à la tige (14a-15a) d'un vérin (14-15), pour assurer le déplacement alternatif en translation desdits modules. En outre, comme indiqué, compte-tenu du problème posé de soumettre une lame sur deux à un effort de poussée (P) et de traction (T), les vérins (14) et (15) sont commandés en sens inverse, de sorte que lorsque le vérin (14) pousse le module (8), le vérin (15) tire le module (9) et inversement. Il apparait donc que les modules (8) et (9) soumettent alternativement, une lame sur deux à un mouvement de poussée et de traction, ce qui permet d'équilibrer les forces exercées sur le bac au moment de la coupe comme il sera indiqué dans la suite de la description.

On voit figure 6 et 7, que les deux modules (8) et (9) sont disposés en superposition. La partie d'extrémité d'accouplement (1b) des lames (1) est conformée pour assurer le positionnement de l'ensemble des lames dans un même plan horizontal. Par exemple, les extrémités d'accouplement (1b) présentent un talon coopérant dans des rainures correspondantes (8a) (9a) des modules (8) et (9). La fixation des lames dans leurs modules respectifs peut par exemple s'effectuer au moyen de deux tiges filetées (16) et (17) engagées dans les talons des lames et coopérant chacune avec des écrous.

Dans une forme de réalisation préférée, l'axe d'articulation (7) du bloc (2) recevant les lames est disposé très sensiblement à une égale distance des parties haute et basse du bac (B). Il apparait donc que le mouvement en arc de cercle décrit par l'ensemble des lames et dont le centre de rotation est constitué par l'axe (7), est symétrique par rapport audit bac. On n'exclut cependant pas une autre position de l'axe d'articulation (7), à la seule condition que l'arc de cercle décrit lors du pivotement angulaire des lames, et en fonction du positionnement angulaire desdites lames, permette de prendre en compte la totalité de la hauteur du bac.

Le dispositif selon l'invention utilise des lames (1) de tous types connus et appropriés, notamment des lames rectilignes avec des parties tranchantes (1c) et (1d) respectivement formées à l'extrémité de la lame et sur la totalité du bord inférieur de cette dernière. Cette ou ces parties tranchantes pouvant par ailleurs, présenter des empreintes en creux profilées pour faciliter le dégagement des produits au fur et à mesure de la coupe.

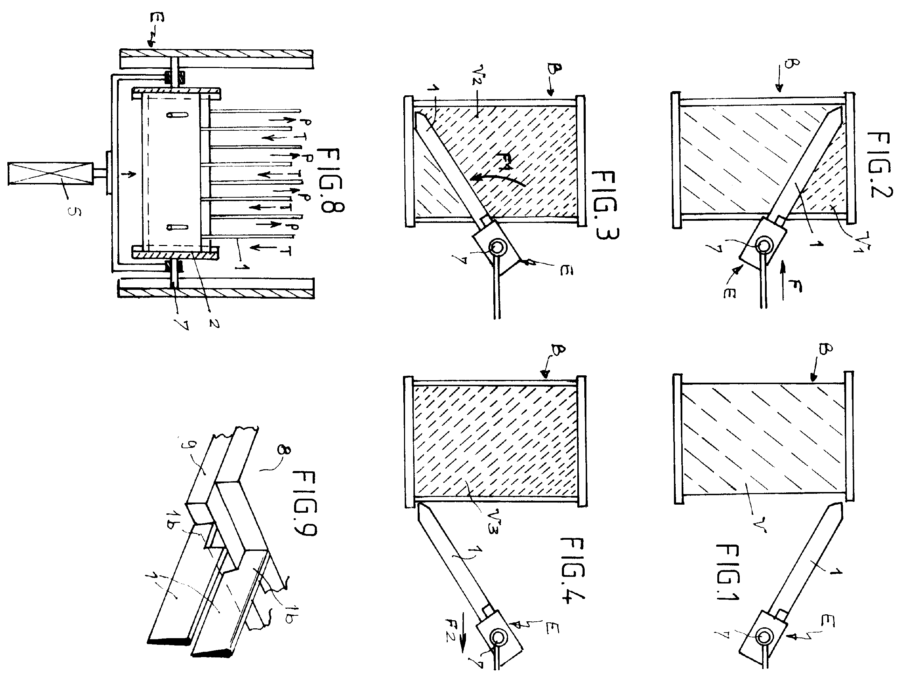

Dans la forme de réalisation illustrée, l'extrémité de chacune des lames, du côté de la partie tranchante (1c), présente une partie biseautée (1e). En position inclinée de l'ensemble des lames (1) au moment de la pénétration dans le bac, cette partie biseautée (1e) est disposée très sensiblement d'une manière parallèle au bord supérieur du bac (figures 1 et 2) . Il en est de même en ce qui concerne l'extrémité tranchante (1c), qui, après pivotement angulaire de l'ensemble des lames, selon l'arc de cercle, est située très sensiblement d'une manière parallèle au fond dudit bac (figure 3 et 4).

Le dispositif de coupe selon l'invention, tel que décrit et illustré, est asservi par une centrale de commande en étant assujetti à différents capteurs de position pour réaliser le cycle de fonctionnement suivant, tel qu'illustré schématiquement aux figures 1, 2, 3 et 4 des dessins.

En position repos, les lames (1) sont disposées angulairement selon l'angle (α) par rapport au plan horizontal où est disposé le bac (B) (figure 1).

L'ensemble (E) est déplacé en translation selon flèche (F) (figure 2), en direction du bac, au moyen du vérin (5), provoquant la pénétration angulaire des lames (1) dans les différentes couches de viandes et/ou de légumes (V), au travers des fentes (B1) du bac (B). A ce stade, une partie des couches de viandes et/ou de légumes (V1) est coupée (figure 2).

Lorsque les lames ont pénétrée sur au moins toute la largeur du bac, les vérins (6) sont actionnés pour provoquer d'une manière concomitante, le basculement angulaire du bloc (2) par rapport à son axe d'articulation (7) ce qui a pour effet de déplacer les lames (1) selon un arc de cercle (F1) (figure 3). Ce mouvement en arc de cercle des lames (1) a pour effet de réaliser la découpe des différentes couches de viandes et/ou de légumes (V2), sur la totalité de la hauteur du bac du côté de l'extrémité tranchante (1c) desdites lames.

L'ensemble est ensuite déplacé en translation en sens inverse, flèche (F2) (figure 4), pour terminer le tranchage des parties des couches de viandes et/ou de légumes (V3) non encore sollicitées par les lames (1) (figure 4).

Le dispositif de coupe selon l'invention peut être utilisé de différentes manières.

Par exemple, le dispositif peut être utilisé directement avec un bac garni des différentes couches de viandes et/ou de légumes préalablement embrochées. Dans ce cas, le dispositif est monté sur un bâti support agencé pour recevoir le bac, des moyens permettant l'indexation angulaire du bac pour présenter deux de ses faces en équerre, successivement en regard et en alignement avec les lames.

Ou bien, le dispositif peut être monté en combinaison avec un dispositif d'embrochage automatique, que présente une machine agencée à cet effet.

Les avantages ressortent bien de la description, en particulier on souligne et on rappelle :
- la qualité parfaite de la coupe sans pour autant diminuer la cadence de production.
- la possibilité de combiner le dispositif de coupe avec un dispositif d'embrochage automatique.
- la simplicité de réalisation des moyens de mise en oeuvre garantissant une grande fiabilité de fonctionnement.

## Revendications

1. Dispositif de coupe de tranches de viandes et/ou de légumes pour la réalisation de brochettes comprenant un ensemble (E) équipé de plusieurs lames (1) disposées en correspondance et en alignement avec des fentes (B1) que présente un bac (B) recevant en superposition les tranches de viande et/ou de légumes, ledit ensemble (E) étant monté avec capacité de déplacement en translation en direction du bac, caractérisé en ce que l'ensemble (E) est assujetti à des moyens de commandes aptes à soumettre successivement les lames (1) à un mouvement de pénétration à l'intérieur du bac, à un mouvement de pivotement angulaire selon un arc de cercle limité pour correspondre à la totalité de la hauteur du bac (B), et à un mouvement de retrait, pour assurer, par la combinaison de ces mouvements, le tranchage de la totalité des différentes couches de viandes et/ou de légumes.

2. Dispositif selon la revendication 1, caractérisé en ce qu'au moment de leur pénétration dans le bac (B), les lames (1) occupent une position angulaire délimitant par rapport au plan horizontal, un angle aigu (α) situé du côté du tranchant (1c) et (1d) desdites lames.

3. Dispositif selon la revendication 1, caractérisé en ce que l'ensemble (E) est équipé d'organes (8-9) aptes à soumettre alternativement les lames à deux mouvements horizontaux opposés, de sorte que, lorsqu'une lame pousse, l'autre tire, correspondant respectivement à une force de poussée et de traction afin d'équilibrer les efforts exercés sur le bac au moment de la coupe.

4. dispositif selon la revendication 3, caractérisé en ce que l'ensemble (E) comprend un bloc (2) monté à libre articulation sur une embase (3) assujettie à des moyens de commande (5) pour être déplacée en translation en direction du bac, ledit bloc (2) auquel sont accouplées les lames (1), étant assujetti à des moyens (6) pour être pivoté angulairement selon l'arc de cercle.

5. Dispositif selon les revendications 3 et 4, caractérisé en ce que le bloc (2) reçoit les organes d'accouplement (8-9) des lames (1) sous forme de deux modules indépendants montés avec capacité de déplacement linéaire en translation limité à l'intérieur dudit bloc (2), chacun desdits modules (8-9) étant accouplé à un moyen de commande (14-15) pour être déplacé linéairement et alternativement selon deux sens opposés, chaque module recevant une série de lames.

6. Dispositif selon la revendication 5, caractérisé en ce que les modules (8-9) sont disposés en superposition, les parties d'extrémité d'accouplement des lames (1) étant conformées, pour qu'après fixation dans les modules correspondants (8-9), lesdites lames (1) soient disposées dans un même plan horizontal.

7. Dispositif selon la revendication 6, caractérisé en ce que les extrémités d'accouplement (1b) des lames (1) présentent un talon coopérant dans des rainures correspondantes (8a-9a) des modules (8-9).

8. Dispositif selon la revendication 4, caractérisé en ce que l'articulation (7) du bloc (2) recevant les lames (1) est disposé très sensiblement à une égale distance des parties haute et basse du bac.

9. Dispositif selon l'une quelconque des revendications 1 à 8, caractérisé en ce qu'il est asservi par des moyens de commande aptes à assurer le cycle de fonctionnement suivant, en combinaison avec des détecteurs de position :
- déplacement en translation de l'ensemble (E) en direction du bac (B), les lames (1) étant inclinées ;
- pénétration des lames (1), en position inclinée, dans les différentes couches de viandes et/ou de légumes, au niveau de la partie haute ou basse du bac ;
- lorsque l'extrémité libre au moins des lames à pénétrée dans la totalité de la largeur du bac (B), pivotement angulaire de l'ensemble selon un arc de cercle décrivant la totalité de la hauteur du bac ;
- déplacement en translation de l'ensemble (E) en sens inverse, pour le retrait des lames (1) .

10. Dispositif selon l'une quelconque des revendications 1 à 9 et son application à une machine pour la fabrication automatique de brochettes de viandes et/ou de légumes.

## Patentansprüche

1. Vorrichtung zum Schneiden von Fleisch- und/oder Gemüsescheiben für die Herstellung von Schaschlikspießen, bestehend aus einem System (E) aus mehreren Messern (1), die in entsprechender Ausrichtung zu den Schlitzen (B1) eines Behälters (B) angeordnet sind, der die übereinandergelegten Fleisch- und/oder Gemüsescheiben aufnimmt, wobei das besagte System (E) in Richtung auf den Behälter verschiebbar ist, dadurch gekennzeichnet, daß das System (E) geeignete Steuerungsvorrichtungen besitzt, um die Messer (1) nacheinander eine Eindringbewegung in das Innere des Behälters, eine Winkelschwenkbewegung nach einem begrenzten Kreisbogen entsprechend der Gesamthöhe des Behälters (B) und eine Rückzugbewegung ausführen zu lassen und durch die Kombination dieser Bewegungen für das Zurechtschneiden der einzelnen Fleisch- und/oder Gemüseschichten zu sorgen.

2. Vorrichtung nach Anspruch 1, dadurch gekennzeichnet, daß die Messer (1) beim Eindringen in den Behälter (B) eine Winkelstellung einnehmen, die gegenüber der waagrechten Ebene auf der Seite der Schneide (1c) und (1d) einen spitzen Winkel (α) begrenzt.

3. Vorrichtung nach Anspruch 1, dadurch gekennzeichnet, daß das System (E) Einrichtungen (8-9) besitzt, die geeignet sind, die Messer abwechselnd in zwei entgegengesetzte waagrechte Bewegungen zu versetzen, so daß ein Messer drückt, während das andere zieht, je nach einer entsprechenden Druck- und Zugkraft, um die beim Schneiden auf den Behälter einwirkende Kräften auszugleichen.

4. Vorrichtung nach Anspruch 3, dadurch gekennzeichnet, daß das System (E) einen freigelenkig auf einem Unterteil (3) angebrachten Block (2) besitzt, wobei das Unterteil (3) durch Steuervorrichtungen (5) in Richtung auf den Behälter verschoben werden kann und der besagte Block (2) mit den angekuppelten Messern (1) Vorrichtungen (6) für die Winkelschwenkbewegung nach dem Kreisbogen unterworfen ist.

5. Vorrichtung nach Anspruch 3 und 4, dadurch gekennzeichnet, daß der Block (2) die Kupplungseinrichtungen (8-9) der Messer (1) in Form zweier unabhängiger Baugruppen aufnimmt, die so angebracht sind, daß sie innerhalb des besagten Blocks (2) linear begrenzt verschiebbar sind, wobei jede der genannten Baugruppen (8-9), die jeweils einen Messersatz aufnimmt, an eine Steuervorrichtung (14-15) für die lineare und alternierende Bewegung in zwei entgegengesetzten Richtungen angekuppelt ist.

6. Vorrichtung nach Anspruch 5, dadurch gekennzeichnet, daß die Baugruppen (8-9) übereinander angeordnet sind, wobei die äußersten Kupplungsteile der Messer (1) so ausgebildet sind, daß die besagten Messer (1) nach der Befestigung in den entsprechenden Baugruppen (8-9) auf einer gleichen horizontalen Ebene liegen.

7. Vorrichtung nach Anspruch 6, dadurch gekennzeichnet, daß die Kupplungsenden (1b) der Messer (1) in entsprechenden Nuten (8a-9a) der Baugruppen (8-9) ein mitwirkendes Fersenstück aufweisen.

8. Vorrichtung nach Anspruch 4, dadurch gekennzeichnet, daß das Gelenk (7) des die Messer (1) aufnehmenden Blocks (2) ziemlich genau in gleichem Abstand vom oberen und unteren Teil des Behälters angeordnet ist.

9. Vorrichtung nach irgendeinem der Ansprüche 1-8, dadurch gekennzeichnet, daß sie durch Steuervorrichtungen betätigt wird, die dazu geeignet sind, in Verbindung mit Stellungsmeldern für folgenden Arbeitszyklus zu sorgen:
- Translationsbewegung des Systems (E) in Richtung auf den Behälter (B), wobei die Messer (1) schräg stehen;
- Eindringen der Messer (1) in schräger Stellung in die einzelnen Fleisch- und/oder Gemüseschichten auf Höhe des oberen bzw. unteren Behälterteils;
- wenn zumindest das freie Ende der Messer in die gesamte Breite des Behälters (B) eingedrungen ist, erfolgt eine Winkelschwenkbewegung des Systems nach einem Kreisbogen, der die gesamte Behälterhöhe beschreibt;
- Translationsbewegung des Systems (E) in umgekehrter Richtung zum Herausziehen der Messer (1).

10. Vorrichtung nach irgendeinem der Ansprüche 1-9 und Anwendung auf eine Maschine für die automatische Herstellung von Fleisch- und/oder Gemüsespießen.

## Claims

1. Device for slicing meat and/or vegetables in order to make kebabs or similar comprising an assembly (E) equipped with a plurality of blades (1) disposed so as to mate with slots (B1) in a container (B) in which the slices of meat and/or vegetables are placed one on top of the other, said assembly (E) being capable of translational movement towards the container, characterized in that assembly (E) is operated by control means designed to cause blades (1) to successively penetrate inside the container, pivot angularly according to a limited arc of a circle corresponding to the full height of container (B) and withdraw, ensuring the slicing of all the various layers of meat and/or vegetables by a combination of these movements.

2. Device as claimed in claim 1, characterized in that blades (1) have an angular position when they penetrate inside container (B) delimiting an acute angle (α) on the cutting edge side (1c) and (1d) of said blades in relation to a horizontal plane.

3. Device as claimed in claim 1, characterized in that assembly (E) is equipped with elements (8-9) designed to alternately subject the blades to a double horizontal motion so that when one blade pushes the other pulls, corresponding respectively to a pushing and pulling force intended to balance out the stress applied to the container during cutting.

4. Device as claimed in claim 3, characterized in that assembly (E) comprises a unit (2) mounted jointedly on a base (3) operated by control means (5) ensuring its translational movement towards the container, blades (1) being connected to said unit (2) which is controlled by means (6) pivoting it angularly according to the arc of a circle.

5. Device as claimed in claims 3 and 4, characterized in that unit (2) is equipped with coupling elements (8-9) for blades (1) in the form of two separate modules capable of limited linear translation inside said unit (2), each of said modules (8-9) being connected to control means (14-15) controlling its linear and reciprocating movement in two opposite directions, each module being equipped with a series of blades.

6. Device as claimed in claim 5, characterized in that modules (8-9) are superimposed, the coupling ends of blades (1) being formed so that said blades (1) are disposed in the same horizontal plane after attachment to the corresponding modules (8-9).

7. Device as claimed in claim 6, characterized in that coupling ends (1b) of blades (1) have a heel mating with the corresponding grooves (8a-9a) of modules (8-9).

8. Device as claimed in claim 4, characterized in that joint (7) of unit (2) fitted with blades (1) is essentially located at an equal distance from the top and bottom part of the container.

9. Device as claimed in any of claims 1 to 8, characterized in that it is controlled by control means designed to perform the following operating cycle in conjunction with position detectors:
- translation of assembly (E) towards container (B) with blades (1) at an angle;
- penetration of blades (1), at an angle, through the various layers of meat and/or vegetables in the top or bottom part of the container;
- when at least the free end of the blades has penetrated through the full width of container (B), angular pivoting of the assembly according to an arc of a circle corresponding to the full height of the container;
- translation of assembly (E) in reverse direction to withdraw blades (1).

10. Device as claimed in any of claims 1 to 9 and its application to a machine for automatically preparing meat and/or vegetable kebabs or similar.
